Europäisches Patentamt

European Patent Office

Office européen des brevets

(19)

(11) Veröffentlichungsnummer: **0 149 066**

**A1**

(12) # EUROPÄISCHE PATENTANMELDUNG

(21) Anmeldenummer: **84114229.2**

(22) Anmeldetag: **24.11.84**

(51) Int. Cl.⁴: **H 02 M 3/156**

(30) Priorität: **08.12.83 CH 6566/83**

(43) Veröffentlichungstag der Anmeldung:
**24.07.85 Patentblatt 85/30**

(84) Benannte Vertragsstaaten:
**AT BE CH DE FR GB IT LI NL SE**

(71) Anmelder: **Willi Studer AG, Fabrik für elektronische Apparate**
**Althardstrasse 30**
**CH-8105 Regensdorf(CH)**

(72) Erfinder: **Lagadec, Roger, Dr. Dipl. Ing. ETH**
**Schulstrasse 22**
**CH-8153 Rümlang ZH(CH)**

(54) **Gerät zur Speisung einer Anlage zur Verarbeitung von elektrischen Signalen.**

(57) Bei einem solchen Gerät ist die Frequenz fg, mit der das Schaltelement (6) gesteuert und synchronisiert wird, dem Einfachen oder Vielfachen der halben Abtastfrequenz fs gleich.

In dieser Weise kann das Original-Frequenzspektrum von Störsignalen freigehalten werden.

Fig. 1

EP 0 149 066 A1

# Gerät zur Speisung einer Anlage zur Verarbeitung von elektrischen Signalen

Die vorliegende Erfindung betrifft ein Gerät zur Speisung einer Anlage zur Verarbeitung von elektrischen Signalen, die durch Abtastung mit einer Frequenz fs aus einem Hauptsignal entstanden sind, mit wenigstens einer Vorrichtung, die ein Schaltelement zur Erzeugung frequenzkonstanter elektrischer Impulse enthält.

Es sind Schaltnetzwerke mit konstanter Schaltfrequenz und mit Pulsbreitenmodulation bekannt, die zur Speisung von elektronischen Anlagen mit Gleichstrom bzw. Gleichspannung dienen. Solche Schaltnetzwerke werden mit der Frequenz fo eines eigenen Oszillators betrieben.

Zu den erwähnten Anlagen gehören unter anderem auch digital arbeitende Audiosysteme, in welchen das Nutzsignal mit einer Frequenz fs abgetastet wird und in welchen die so entstandenen impulsartigen Signale dann verarbeitet werden. Da die Frequenz des Oszillators fo im speisenden Netzwerk von der Frequenz fs der Abtastung unterschiedlich ist, sind in solchen Anlagen unerwünschte Signale, wie z.B. Interferenzen nicht zu vermeiden, die eine starke spektrale Komponente bei der Abtastfrequenz fs und eine starke Komponente bei der Oszillatorfrequenz fo haben. Solche Signale können als Digitalsignale oder als mit der Abtastfrequenz fs abgetastete Signale auftreten.

Die genannten Interferenzen treten insbesondere in Analog-Digital-Wandlern auf. Die durch Interferenz entstandenen neuen Signale können im Hörbereich des menschlichen Ohres liegen und zudem kann sich die Frequenz solcher und innerhalb des hörbaren Frequenzbereiches liegenden Interferenzsignale ändern. Dies geschieht vor allem dann, wenn die Oszillatorfrequenz fo im Schaltnetzteil nicht absolut konstant ist. Die genannte Aenderung der Frequenz tritt beispielsweise bei sich ändernder Belastung des Oszillators im Netzteil auf.

Die Aufgabe der vorliegenden Erfindung ist, ein Gerät zur Speisung von digital arbeitenden Anlagen so zu gestalten, dass das Spektrum des Originalsignals von den genannten Störsignalen frei ist.

Diese Aufgabe wird beim eingangs genannten Gerät zur Speisung einer Anlage zur Verarbeitung von elektrischen Signalen erfindungsgemäss so gelöst, wie dies im kennzeichnenden Teil des Anspruchs 1 definiert ist.

Die durch die Erfindung erreichten Vorteile sind im wesentlichen darin zu sehen, dass infolge der Synchronisierung zwischen der Abtastfrequenz und der Schaltfrequenz des Schaltelementes Interferenzen zwischen diesen vermieden werden können. Bisher waren Interferenzen möglich zwischen einer Signalfrequenz, der Abtastfrequenz, der entsprechenden Nyquistfrequenz und der Schaltfrequenz. Dadurch, dass die Schaltfrequenz mit der Nyquistfrequenz oder der Abtastfrequenz zusammenfällt, fallen einige Möglichkeiten zur Bildung von Interferenzen dahin. Bei digital arbeitenden Audio-Anlagen können somit vor allem stationäre Störfrequenzen im Hörbereich vermieden werden.

Nachstehend werden Ausführungsbeispiele der vorliegenden Erfindung anhand der beiliegenden Zeichnungen näher erläutert. Es zeigt:
Fig. 1 ein Schaltschema einer ersten Ausführungsform des vorliegenden Gerätes,
Fig. 2 den Frequenzgang einer Audio-Anlage,
Fig. 3 eine zweite Ausführungsform des vorliegenden Gerätes und

Fig. 4 und 5 Darstellungen der durch das Gerät nach Fig. 3 verarbeiteten Spannungen.

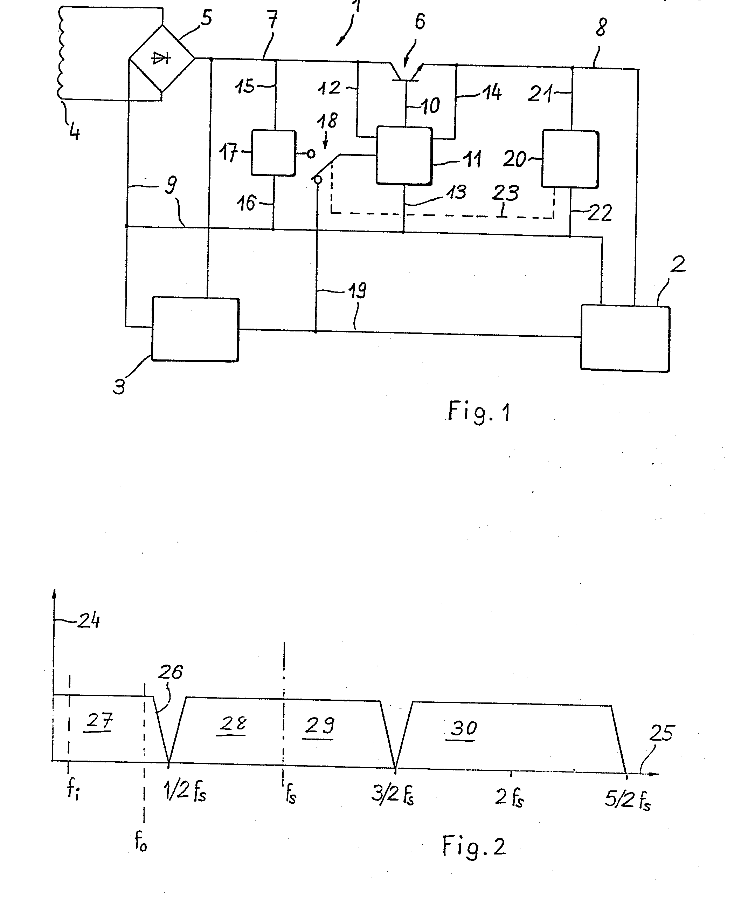

In Fig. 1 ist ein Gerät zur Speisung einer Anlage 2 dargestellt, die zur Verarbeitung von durch die Abtastung eines Eingangs- bzw. Nutzsignals mit einer vorgegebenen Frequenz fs entstandenen Signalen dient. Als Anlage 2 kommen beispielsweise digital arbeitende Audio-Anlagen zur Aufnahme oder Wiedergabe von Signalen oder einzelne Apparate für solche Anlagen in Frage. Aber auch andere, hier nicht genannte digital arbeitende Anlagen, bei denen Abtastwerte bzw. Abtastsignale zu verarbeiten sind, können als Anlage 2 verstanden werden. Dabei kann die Anlage 2 über einen eigenen integrierten Abtastfrequenzgenerator verfügen oder die Abtastfrequenz kann der Anlage 2 aus einer externen Quelle zugeführt werden. Die Abtastfrequenz fs kann beispielsweise von einem Abtastfrequenzgenerator 3 stammen, der die Analge 2 und das vorliegende Gerät mit der halben Abtastfrequenz fs/2 bzw. mit dem Einfachen oder Vielfachen der halben Abtastfrequenz fs/2 synchronisiert.

Das in Fig. 1 dargestellte Gerät weist eine Vorrichtung 1 auf, die einen Transformator 4 enthält. An die Sekundärwicklung dieses Transformators 4 sind eine Gleichrichterbrücke 5 sowie ein Schaltelement 6 angeschlossen. Im dargestellten Beispiel dient ein Transistor 60 als das Schaltelement. In einem solchen Schaltelement können jedoch auch mehrere Transistoren verwendet werden. Es versteht sich, dass auch andersartig ausgebildete Anordnungen, die dieselbe Funktion ausführen können, unter den Begriff Schaltelement fallen.

Eine Leitung 7 verbindet die Gleichrichterbrücke 5 mit dem Schaltelement 6, während eine weitere Leitung 8 das Schaltelement 6 mit der Anlage 2 verbindet. Eine dritte Leitung 9 verbindet den zweiten Pol der Gleichrichterbrücke 5 mit der Anlage 2. Das Schaltelement 6 verfügt über einen Steuereingang 10, der sich auf der Basis des Transistors 60 befindet und der an einen Pulsbreitenregler 11 angeschlossen ist. Leitungen 12 und 13 dienen der Speisung des Pulsbreitenreglers 11. Eine Leitung 14 dient der Meldung der Ausgangs-Spannungs/Stromverhältnisse in der Leitung 8 an den Pulsbreitenregler 11.

Ein Oszillator 17 ist über Speisungsanschlüsse 15 und 16 zwischen die Leitungen 7 und 9 eingeschaltet. Die Ausgangsklemme des Oszillators 17 ist an einen der Pole eines Umschalters 18 angeschlossen, der mit dem Pulsbreitenregler 11 verbunden ist. Der andere Pol des Umschalters 18 ist an eine Leitung 19 angeschlossen, die einen Abtastfrequenzgenerator 3 mit der Anlage 2 verbindet.

Ein Spannungsmesser 20 ist über Anschlüsse 21 und 22 mit den Leitungen 8 und 9 verbunden. Eine weitere Leitung 23 verbindet diesen mit dem Umschalter 18 und sie dient zur Uebermittlung von Schaltbefehlen.

Fig. 2 zeigt den möglichen Frequenzgang einer an das Gerät angeschlossenen Anlage 2. Auf der senkrechten Achse 24 des in dieser Figur gezeigten Diagramms kann die Amplitude in dB und auf der waagrechten Achse 25 kann die Frequenz angegeben sein. Der Arbeitsbereich der Anlage 2 liegt dabei unterhalb der halben Abtastfrequenz fs/2. Signale mit höheren Frequenzen als fs/2 werden in an sich bekannter Weise durch Filter herausgefiltert. Ein Uebergangsbereich zwischen zulässigen Signalen und unerwünschten Signalen wird durch die Linie 26 vereinfacht angedeutet. Gemäss dem Sampling-Theorem von Shannon erscheint das Originalspektrum 27 als Faltung 28, 29 und 30 um die Abtastfrequenz fs wieder.

Die Hauptaufgabe der Vorrichtung 1 des vorliegenden Gerätes besteht darin, der Anlage 2 eine bestimmte Leistung bei einer bestimmten möglichst konstanten Spannung über die Leitungen 8 und 9 zuzuführen. Meistens wird diese Leistung einem Wechselstromnetz entnommen. Die Sekundärwicklung des Transformators 4 nimmt diese Leistung aus dem Netz auf und leitet sie in die Gleichrichterbrücke 5, die einen Gleichstrom in die Leitungen 7 und 9 abgibt. Um die zugeführte Leistung an die Eigenschaften der Anlage 2 anpassen zu können, unterbricht das Schaltelement 6 die Verbindung zwischen den Leitungen 7 und 8 periodisch. Die in der Leitung 8 auftretenden Stromimpulse werden in an sich bekannter aber hier nicht näher beschriebener Weise geglättet. Die genannten Stromimpulse weisen zwar immer dieselbe Spannung auf aber nicht dieselbe Pulsdauer bzw. Pulsbreite. Die Pulsbreite wird in ebenfalls bekannter Weise durch den Pulsbreitenregler 11 geändert. Solche Impulse steuern dann das Schaltelement 6 dementsprechend. Die Frequenz, mit der das Schaltelement 6 gesteuert wird, ist konstant und sie wird normalerweise vom Oszillator 17 bestimmt. wenn sich der Umschalter 18 in der entsprechenden Stellung befindet.

In empfindlichen Anlagen 2 treten teils dominierende Signale auf, welche einerseits die Abtastfrequenz fs und welche andererseits die Oszillatorfrequenz fo aufweisen. Diese Signale interferieren miteinander so, dass unter Umständen weitere Signale bei Frequenzen fi entstehen, deren Frequenz verhältnismässig klein sein kann. Die Formel für die resultierenden Interferenzfrequenzen ist

$$(\pm\ m.fs/2 \pm n.fo/2)\ modulo\ fs/2,$$

wobei m und n beliebige ganze Zahlen sein können. Die Operation modulo fs/2 deutet darauf hin, dass die positiven oder negativen Frequezen $\pm n.mfo/2$ ins Basisband fs/2 zurückgefaltet werden. wie dies bei Abtastsystemen bekannt ist. Wenn fs=48kHz und fo=20kHz sind. so ergibt sich mit m=1 und n=2 und einem Minusvorzeichen in der wiedergegebenen Formel beispielsweise eine Frequenz fi=4kHz. Ist die Anlage 2 beispielsweise ein Audio-System, so sind Signale mit der Frequenz fi gut hörbar.

Ist der Umschalter 18 an den Abtastfrequenzgenerator 3 angeschlossen, wie dies in Fig. 1 gezeigt ist, so wird die Pulsfrequenz des Pulsbreitenreglers 11 und somit auch des Schaltelementes 6 von der Abtastfrequenz fs bestimmt. Diese Abtastfrequenz fs gelangt zum Pulsbreitenregler 11 entweder vom Abtastfrequenzgenerator 3 oder von der Anlage 2 selbst, wenn kein gesonderter Abtastfrequenzgenerator 3 vorgesehen ist.

Der Spannungsmesser 20 überwacht die Spannung in den Leitungen 8 und 9. Unterschreitet die Spannung zwischen diesen Leitungen 8 und 9 den gewünschten Wert, so gibt der Spannungsmesser 20 über die Leitung 23 einen Schaltbefehl an den Umschalter 18 ab. Dieser Schaltbefehl verursacht, dass das Schaltelement 6 wieder an den Oszillator 17 mit der Frequenz fo angeschlossen wird. Dies geschieht in erster Linie bei Ein- und Ausschaltvorgängen sowie bei Störungen in der Stromversorgung.

Sind für eine oder mehrere Anlagen 2 mehrere Vorrichtungen 1 im vorliegenden Gerät vorgesehen, so ist es vorteilhaft, diese bzw. deren Schaltelemente 6 auf dieselbe Abtastfrequenz zu synchronisieren, indem man einen gemeinsamen Abtastfrequenzgenerator 3 für alle Vorrichtungen 1 vorsieht. Dabei kann es von Vorteil sein, die einzelnen Vorrichtungen 1 mit einer Phasenverschiebung gegeneinander arbeiten zu lassen. Bei n Vorrichtungen 1 kann die Phasenverschiebung zwischen den einzelnen Vorrichtungen 2pi/n betragen. Dies hat den Vorteil, dass die primärseitige Belastung des Transformators 4 gleichmässiger wird.

Ebenso ist es möglich, das vorliegende Gerät zur Versorgung einer Anlage 2 mit Gleichstrom so zu gestalten, dass die Frequenz des Wechselstromes, aus dem Gleichstrom gewonnen wird, ein Einfaches bzw. Vielfaches der halben Abtastfrequenz $f_s$ ist. Eine entsprechende Schaltungsanordnung ist in Fig. 3 dargestellt.

Die in Fig. 3 dargestellte Vorrichtung 1 wird aus einer Quelle 31 von Wechselspannung, beispielsweise von Netzspannung, mit Energie beliefert. Die Spannung wird über Leitungen 32 und 33 einem an sich bekannten Umformer 34 zugeführt, der die zugeführte Spannung in eine Wechselspannung mit einer Frequenz umformt, die ein Einfaches oder ein Vielfaches der halben Abtastfrequenz $f_s$ darstellt. Leitungen 35 und 36 verbinden den Ausgang des Umformers 34 mit einem Transformator 37, dem ein steuerbarer Gleichrichter 40 als das bereits genannte Schaltelement 6 über Leitungen 38 und 39 nachgeschaltet ist. Der Gleichrichter 40 ist vorzugsweise als eine FET-Brücke ausgebildet.

Der Gleichrichter 40 ist über weitere Leitungen 41 und 42 mit der Anlage 2 sowie mit dem Abtastfrequenzgenerator 3 verbunden. In die Leitung 41 ist eine Induktivität 43 geschaltet, die zusammen mit einem Kondensator 44, der über eine Leitung 45 zwischen die Leitungen 41 und 42 geschaltet ist, ein Mittel zur Glättung der Stromimpulse bildet. Der Abtastfrequenzgenerator 3 ist über Leitungen 46 und 47 sowie über einen Uebertrager 48 an den Umformer 34 angeschlossen. Ferner ist der Spannungsmesser 20 zwischen die Leitungen 41 und 42 eingesetzt. Eine Steuereinheit 49 ist über Leitungen 50, 51 und 52 mit dem Gleichrichter 40, dem Abtastfrequenzgenerator 3 und dem Spannungsmesser 20 verbunden. Die bereits früher erwähnte Leitung 19 verbindet ferner den Abtastfrequenzgenerator 3 mit der Anlage 2.

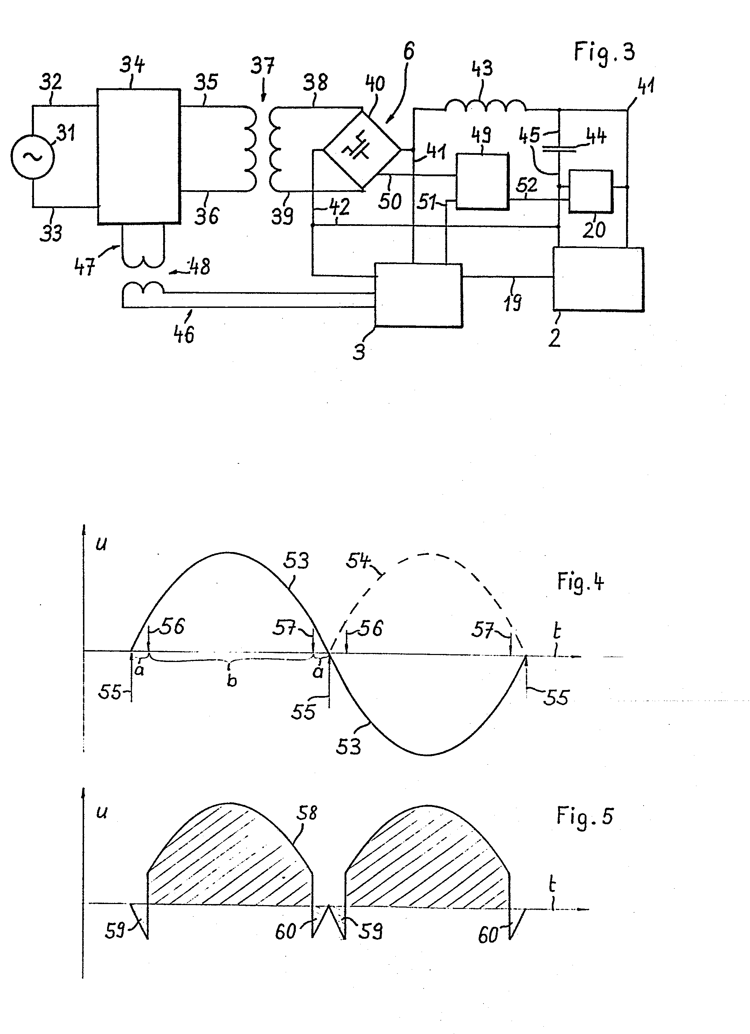

Es sei angenommen, dass die Spannungsquelle 31 eine sinusförmige Spannung (Fig. 4), beispielsweise Netzspannung,

liefert, die im Umformer 34 zu einer sinusförmigen Spannung 53 von höherer Frequenz umgeformt wird. Diese Spannung 53 wird über den Transformator 37 dem steuerbaren Gleichrichter 40 zugeführt, der aus dieser Spannung 53 eine gleichgerichtete Spannung 53, 54 erzeugt. Dies geschiet zu Zeiten, die durch Pfeile 55 angedeutet sind. In diesem Falle wird der Anlage 2 die maximale Leistung zugeführt.

Zur Steuerung der Vorrichtung 1 gehört, dass einerseits der Umformer 34 über die Leitungen 46 und 47 sowie der Uebertrager 48 ein Taktsignal vom Abtastfrequenzgenerator 3 erhalten, und andererseits, dass der Gleichrichter 40 dasselbe Taktsignal oder ein entsprechend frequenzgeteiltes (mit ganzzahligen Teilen) Taktsignal über die Leitung 50 erhält. Dazu wird die Steuereinheit 49 über die Leitung 51 mit dem Taktsignal angesteuert.

Erhält nun aber die Anlage 2 auf diese Weise zuviel Leistung, so wird dies in Form einer zu hohen Spannung in den Leitungen 41, 42 bzw. 45 von Spannungsmesser 20 ermittelt, der ein Steuersignal über die Leitung 52 an die Steuereinheit 49 abgibt. Die Steuereinheit 49 formt das bisher in regelmässigen Abständen gemäss den Pfeilen 55 ausgegebene Steuersignal für den Gleichrichter 40 um, so dass neue Steuersignale zu Zeiten erscheinen, die durch Pfeile 56 und 57 gekennzeichnet sind. Der Abstand zwischen den Pfeilen 56 und den Pfeilen 57 unter sich entspricht dem zeitliche Abstand einer Periode, wie dies zwischen den Pfeilen 55 der Fall ist. Nun ist aber die Periode verschoben um einen Abstand a und aufgeteilt auf Abstände a plus b plus a.

Dies bedeutet, dass der Gleichrichter 40, statt zu Zeiten entsprechend dem Pfeil 55, erst zur Zeit entsprechend dem Pfeil 56 und dann früher als bisher zum Zeitpunkt entsprechend dem Pfeil 57 wieder umschaltet. Dies ergibt einen Spannungsverlauf 58 gemäss Fig. 5. Die Summe der Flächen zwischen dem Spannungsverlauf 58 und der Zeitachse t ergibt die neue Leistung. Diese Leistung ist, insbesondere wegen den negativen Leistungsanteilen, welche durch Flächen 59, 60 gekennzeichnet sind, kleiner als die Leistung, die jenen Flächen entspricht, die durch die Zeitachse t und die Spannungskurven 53, 54 aus Fig. 4 begrenzt ist.

Soll die Leistung weiter verringert werden, so muss der Abstand a vergrössert werden. Dies wird in der Steuereinheit 49 bestimmt, welche beispielsweise einen Speicher (ROM) enthält, in dem zu vorgegebenen Spannungen, welche dann als Speicheradressen wirken, Umschaltzeiten für den Gleichrichter 40 vorgespeichert sind.

Es dürfte klar sein, dass auch bei dieser Ausführungsform (Fig. 3) des vorliegenden Gerätes, der Abtastfrequenzgenerator 3 Teil der Anlage 2 sein kann bzw. weggelassen werden kann, weil die Anlage 2 selbst die Abtastfrequenz fs liefert.

Patentansprüche

1. Gerät zur Speisung einer Anlage zur Verarbeitung von elektrischen Signalen, die durch Abtastung mit einer Frequenz fs aus einem Hauptsignal entstanden sind, mit wenigstens einer Vorrichtung, die ein Schaltelement zur Erzeugung frequenzkonstanter elektrischer Impulse enthält, dadurch gekennzeichnet, dass die Frequenz fg, mit der das Schaltelement (6) gesteuert und synchronisiert wird, dem Einfachen oder Vielfachen der halben Abtastfrequenz fs entspricht.

2. Gerät nach Anspruch 1, dadurch gekennzeichnet, dass das Schaltelement (6) über einen Pulsbreitenregler (11) mit einem Abtastfrequenzgenerator (3) verbunden ist.

3. Gerät nach Anspruch 2, dadurch gekennzeichnet, dass dem an den Abtastfrequenzgenerator (3) angeschlossenen Pulsbreitenregler (11) ein Schalter (18) vorgeschaltet ist, der von der Ausgangsspannung der Vorrichtung (1) ansteuerbar ist.

4. Gerät nach Anspruch 3, dadurch gekennzeichnet, dass die Ausgangsspannung der Vorrichtung (1) von einem dem Schaltelement (6) nachgeschalteten Spannungsmesser (20) lieferbar ist.

5. Gerät nach Anspruch 3, dadurch gekennzeichnet, dass ein Oszillator (17) vorgesehen ist, der mit dem Schalter (18) so verbunden ist, dass in der einen Schaltstellung des Schalters (18) der Pulsbreitenregler (11) mit dem Oszillator (17) und in der anderen Schaltstellung mit dem Abtastfrequenzgenerator (3) verbunden ist.

6. Gerät nach Anspruch 5, dadurch gekennzeichnet, dass der Schalter (18) so steuerbar ist, dass das Schaltelement (6) nur bei Erreichung einer vorgegebenen Ausgangsspannung der Vorrichtung (1) mit der Abtastfrequenz aus dem Generator (3) synchronisiert ist.

7. Gerät nach Anspruch 1, dadurch gekennzeichnet, dass das Schaltelement (6) ein steuerbarer Gleichrichter (40) ist.

8. Gerät nach Anspruch 7, dadurch gekennzeichnet, dass der Gleichrichter (40) als eine steuerbare FET-Brücke ausgeführt ist.

9. Gerät nach Anspruch 7, dadurch gekennzeichnet, dass dem steuerbaren Gleichrichter (40) eine Steuereinheit (49) vorgeschaltet ist, welche von der Abtastfrequenz und von einem Signal ansteuerbar ist, das proportional zur gewünschten Leistung ist.

10. Gerät nach Anspruch 1, mit mehreren Vorrichtungen der genannten Art, dadurch gekennzeichnet, dass die Schaltelemente (6) in den Vorrichtungen mit derselben Abtastfrequenz synchronisiert werden.

11. Gerät nach Anspruch 10, dadurch gekennzeichnet, dass die Schaltelemente (6) von n Vorrichtungen mit einer Phasenverschiebung

$$\text{von } \frac{2pi}{n} \text{ zueinander angesteuert und synchronisiert werden.}$$

12. Gerät nach Anspruch 1, dadurch gekennzeichnet, dass das Einfache oder Vielfache der Abtastfrequenz fs ganzzahlig ist.

Fig. 1

Fig. 2

0149066

Fig.3

Fig.4

Fig.5

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 079 418 (KUPKA et al.) <br> * Spalte 2, Zeilen 37-47; Spalte 3, Zeile 19 - Spalte 4, Zeile 13 * | 1,2 | H 02 M 3/156 |
| A | DE-B-1 293 304 (CHR. HEMPEL) <br> * Spalte 2, Zeilen 14-50; Spalte 3, Zeile 30 - Spalte 4, Zeile 12 * | 1 | |
| A | US-A-4 368 409 (SIVANESAN et al.) <br> * Spalte 3, Zeilen 12-56; Spalte 7, Zeile 51 - Spalte 8, Zeile 16 * | 1 | |
| A | EP-A-0 071 663 (NOVOTNY) | | |

RECHERCHIERTE SACHGEBIETE (Int. Cl.4)

H 02 M
H 04 N

Der vorliegende Recherchenbericht wurde für alle Patentansprüche erstellt.

| Recherchenort <br> DEN HAAG | Abschlußdatum der Recherche <br> 21-03-1985 | Prüfer <br> KERN H. |
|---|---|---|